# EUROPÄISCHE PATENTSCHRIFT

(11) **EP 2 580 097 B1**
(45) Veröffentlichungstag und Bekanntmachung des Hinweises auf die Patenterteilung: **30.09.2015**
(21) Anmeldenummer: 11720793.6
(22) Anmeldetag: 24.05.2011
(51) Int. Cl.: B60W 30/06, B62D 6/00

(54) **VERFAHREN ZUM UNTERSTÜTZEN EINES FAHRERS EINES KRAFTFAHRZEUGS BEIM EINPARKEN IN EINE PARKLÜCKE, FAHRERASSISTENZEINRICHTUNG UND KRAFTFAHRZEUG**
PROCESS TO ASSIST A DRIVER OF A VEHICLE TO PARK IN A PARKING SPACE, ASSISTING DEVICE AND VEHICLE
PROCÉDÉ D'ASSISTANCE AU CONDUCTEUR D'UN VÉHICULE POUR GARER DANS UN PARKING, DISPOSITIF D'ASSISTANCE ET VÉHICULE

(30) Priorität: 09.06.2010 DE 102010023162
(43) Veröffentlichungstag der Anmeldung: 17.04.2013
(73) Patentinhaber: Valeo Schalter und Sensoren GmbH, 74321 Bietigheim-Bissingen (DE)
(72) Erfinder: GRIMM, Oliver, 74223 Flein (DE); JECKER, Nicolas, 73730 Esslingen (DE)
(74) Vertreter: Pothmann, Karsten
(86) Internationale Anmeldenummer: PCT/EP2011/058399
(87) Internationale Veröffentlichungsnummer: WO 2011/154242

(56) Entgegenhaltungen:
- EP-A2- 2 008 915
- DE-A1- 19 635 892
- JP-A- 2006 321 291
- JP-A- 2009 286 211

## Beschreibung

Die Erfindung betrifft ein Verfahren zum Unterstützen eines Fahrers eines Kraftfarzeugs, wie bekannt aus DE 196 589 A beim Einparken in eine Parklücke, insbesondere in eine Garage, mithilfe einer Fahrerassistenzeinrichtung des Kraftfahrzeugs. Die Erfindung bezieht sich außerdem auf eine Fahrerassistenzeinrichtung, wie auch auf ein Kraftfahrzeug mit einer solchen Fahrerassistenzeinrichtung.

Die DE 196 35 892 A offenbart ein Verfahren zum Unterstützen eines Fahrers eines Kraftfahrzeugs beim Einparken in eine Parklücke, mithilfe einer Fahrerassistenzeinrichtung des Kraftfahrzeugs, wobei:
- in einem Lernmodus der Fahrerassistenzeinrichtung Referenzdaten der Parklücke mithilfe einer Sensoreinrichtung der Fahrerassistenzeinrichtung erfasst und abgespeichert werden, während das Kraftfahrzeug durch den Fahrer gesteuert in die Parklücke eingeparkt wird,
- eine Referenzzielposition, welche im Lernmodus durch das Kraftfahrzeug erreicht wird, durch die Fahrerassistenzeinrichtung erfasst wird und Daten mit Informationen über diese Referenzzielposition abgespeichert werden,
- in einem nachfolgenden von dem Lernmodus unterschiedlichen Betriebsmodus der Fahrerassistenzeinrichtung Sensordaten durch die Sensoreinrichtung erfasst und mit den Referenzdaten verglichen werden,
   und
- abhängig von der aktuellen Position des Kraftfahrzeugs relativ zur Referenzzielposition eine Parkbahn durch die Fahrerassistenzeinrichtung festgelegt wird, entlang welcher das Kraftfahrzeug aus der aktuellen Position heraus in die Parklücke eingeparkt wird.

Das Interesse richtet sich vorliegend insbesondere auf das Unterstützen des Fahrers beim Einparken in eine solche Parklücke, in welche das Kraftfahrzeug häufigerbeispielsweise täglich - eingeparkt wird. Es kann sich beispielsweise um eine Garage oder aber um einen Stellplatz handeln. Es wird insbesondere eine Lösung gesucht, wie ein Kraftfahrzeug aus einer beliebigen Startposition heraus vollständig autonomfahrerunabhängig - durch die Fahrerassistenzeinrichtung in eine solche Parklücke eingeparkt werden kann.

Aus der Druckschrift EP 1 249 379 B1 ist ein Verfahren bekannt, welches zum Einparken eines Kraftfahrzeugs in eine Parklücke dient. Das Kraftfahrzeug wird zunächst - durch den Fahrer gesteuert - in eine Startposition nahe der angestrebten Zielposition gebracht. Es wird die Umgebung des Kraftfahrzeugs fortlaufend erfasst, und die aktuelle Position des Fahrzeugs relativ zur Parklücke wird ermittelt. Anhand der ermittelten relativen Position des Kraftfahrzeugs bezüglich der Parklücke, wie auch anhand der erfassten Umgebungsdaten werden dann Steuerinformationen für den Vorgang des Einparkens ermittelt. Der Fahrer kann dann durch Betätigung einer Bedieneinrichtung den tatsächlichen Parkvorgang einleiten. Nach Einleiten des Parkvorgangs durch den Fahrer werden Steuerbefehle an den Antriebsstrang, die Bremsanlage, wie auch die Lenkung des Kraftfahrzeugs ausgegeben, sodass das Kraftfahrzeug in die Parklücke fahrerunabhängig eingeparkt wird.

Die Druckschrift EP 1 858 744 B1 beschreibt ein Verfahren zum Durchführen eines Parkvorgangs eines Kraftfahrzeugs. Es wird eine Wegstrecke während einer Fahrt des Fahrzeugs von einem Anfangspunkt zu einem Endpunkt aufgezeichnet. Im Anschluss daran wird das Kraftfahrzeug entlang der aufgezeichneten Wegstrecke von dem Endpunkt hin zum Anfangspunkt automatisch zurückgeführt. Also kann das Kraftfahrzeug im Gegenstand gemäß Druckschrift EP 1 858 744 B1 entlang einer zuvor aufgezeichneten Wegstrecke autonom geführt werden. Dies ist vor allem dann vorteilhaft, wenn das Fahrzeug in eine Parklücke eingeparkt werden soll, die keinen geeigneten Platz zum Ein- bzw. Aussteigen lässt. Der Fahrer kann zunächst das Fahrzeug an einer gewünschten Position in der Parklücke positionieren, aus der Parklücke herausfahren und das Fahrzeug anschließend verlassen. Nun wird das Fahrzeug automatisch entlang der aufgezeichneten Wegstrecke zurück auf die gewünschte Parkposition geführt. Ein solches automatisches Einparken setzt jedoch voraus, dass sich das Kraftfahrzeug auf der bereits aufgezeichneten Wegstrecke befindet, nämlich an dem Anfangspunkt oder aber dem Zielpunkt. Das automatische Einparken aus einer beliebigen Startposition heraus ist somit nicht möglich.

Das Dokument DE 10 2004 007 850 A1 beschreibt ein Verfahren zur automatischen Haltestellenanfahrt für Linienbusse. Eine Sensoreinrichtung erfasst Sensordaten über die Umgebung des Busses. Anhand bestimmter Referenzmerkmale wird eine Haltestelle erkannt, und aus einer Datenbank werden zugehörige Daten zur erkannten Haltestelle abgerufen, nämlich beispielsweise die Geometrie der Haltestelle.

Es ist Aufgabe der vorliegenden Erfindung, eine Lösung aufzuzeigen, wie ein Fahrer eines Kraftfahrzeugs beim Einparken in eine häufig angefahrene Parklückeinsbesondere in eigene Garage - ausgehend von einer beliebigen Anfangsposition besonders zuverlässig unterstützt werden kann.

Diese Aufgabe wird erfindungsgemäß durch ein Verfahren mit den Merkmalen gemäß Patentanspruch 1, wie auch durch eine Fahrerassistenzeinrichtung mit den Merkmalen gemäß Patentanspruch 15 gelöst. Vorteilhafte Ausführungen der Erfindung sind Gegenstand der abhängigen Patentansprüche und der Beschreibung.

Bei einem erfindungsgemäßen Verfahren wird ein Fahrer eines Kraftfahrzeugs beim Einparken in eine Parklücke - insbesondere in eine täglich abgefahrene Parklücke, bevorzugt in eine Garage - mithilfe einer Fahrerassistenzeinrichtung des Kraftfahrzeugs unterstützt. Die Fahrerassistenzeinrichtung weist einen Lernmodus sowie einen Betriebsmodus auf. In dem Lernmodus werden Referenzdaten über einen Umgebungsbereich der Parklücke mithilfe einer Sensoreinrichtung der Fahrerassistenzeinrichtung erfasst und abgespeichert, während das Kraftfahrzeug durch den Fahrer gesteuert in die Parklücke eingeparkt wird. Im Lernmodus wird außerdem eine Referenzzielposition durch die Fahrerassistenzeinrichtung erfasst, welche im Lernmodus durch das Kraftfahrzeug erreicht wird. Es werden Daten mit Informationen über die Referenzzielposition - insbesondere in Bezug auf den Umgebungsbereich - abgespeichert. Im nachfolgenden Betriebsmodus werden Sensordaten durch die Sensoreinrichtung erfasst und mit den Referenzdaten verglichen. Abhängig von diesem Vergleich wird der Umgebungsbereich der Parklücke anhand der erfassten Sensordaten erkannt bzw. identifiziert, und es wird eine aktuelle Position des Kraftfahrzeugs relativ zur Referenzzielposition bestimmt. Abhängig von der aktuellen Position des Kraftfahrzeugs relativ zur Referenzzielposition wird eine Parkbahn durch die Fahrerassistenzeinrichtung festgelegt, entlang welcher das Kraftfahrzeug aus der aktuellen Position heraus in die Parklücke eingeparkt wird.

Der Erfindung liegen mehrere Erkenntnisse zugrunde: Die Erfindung beruht zunächst auf der Erkenntnis, dass im Stand der Technik - nämlich im Gegenstand gemäß Druckschrift EP 1 858 744 B1 - der Vorgang des Einparkens nur aus einer Startposition heraus eingeleitet werden kann, die auf der zuvor aufgezeichneten Bahn liegt. Die Erfindung baut weiterhin auf der Erkenntnis auf, dass somit das Verfahren gemäß Druckschrift EP 1 858 744 B1 auf eine häufig angefahrene Parklücke - nämlich insbesondere eine Garage - nicht angewandt werden kann, da der Fahrer beim Anfahren der Garage das Kraftfahrzeug jedes Mal an einer anderen Anfangsposition anhalten wird. Die Erfindung basiert ferner auf der Erkenntnis, dass selbst dann, wenn im Stand der Technik - wie im Gegenstand gemäß Druckschrift EP 1 249 379 B1 - die Parkbahn jeweils neu ausgehend von einer beliebigen Anfangsposition berechnet wird, ein zuverlässiges Einparken nicht immer gewährleistet werden kann, etwa wenn die Parklücke durch die Sensoreinrichtung aufgrund von in der Umgebung befindlichen Hindernissen nicht erfasst werden kann. Die Erfindung beruht schließlich auf der Erkenntnis, dass die Nachteile des Stands der Technik dadurch umgangen werden können, dass einerseits in dem Lernmodus sowohl Referenzdaten über den Umgebungsbereich der Parklücke als auch Daten mit Informationen über die Referenzzielposition bezüglich des Umgebungsbereichs abgespeichert werden und andererseits in dem Betriebsmodus der Umgebungsbereich der Parklücke identifiziert wird und jeweils abhängig von der aktuellen Position des Kraftfahrzeugs relativ zur Referenzzielposition eine Parkbahn zum Erreichen der Parklücke festgelegt wird. Es gelingt auf diesem Wege, eine zum Ziel führende Parkbahn auch dann aus einer beliebigen Anfangsposition heraus festzulegen, wenn die Parklücke durch die Sensoreinrichtung momentan nicht erfasst werden kann. Die Fahrerassistenzeinrichtung kann sich nämlich an dem erfassten Umgebungsbereich orientieren und hierdurch die augenblickliche Position des Kraftfahrzeugs relativ zur Referenzzielposition ermitteln. Die Erfindung hat also den Vorteil, dass einerseits die Parkbahn zum Erreichen der Parklücke ausgehend von einer beliebigen Anfangsposition, an welcher das Kraftfahrzeug durch den Fahrer angehalten wird, festgelegt werden kann und andererseits der Vorgang des Einparkens auch dann eingeleitet werden kann, wenn die Parklücke selbst durch die Sensoreinrichtung momentan nicht erfasst werden kann.

Also weist die Fahrerassistenzeinrichtung zwei verschiedene Betriebsmodi auf, nämlich den Lernmodus einerseits und den Betriebsmodus andererseits. Es kann vorgesehen sein, dass die Fahrerassistenzeinrichtung in den Lernmodus aufgrund einer Eingabe verbracht wird, die der Fahrer an einer Eingabeeinrichtung - beispielsweise einer Bedieneinrichtung und/oder einer akustischen Eingabeeinrichtung - vornimmt. Auch der Betriebsmodus kann prinzipiell aufgrund einer Eingabe des Fahrers eingeleitet werden. Es erweist sich jedoch als besonders vorteilhaft, wenn der Betriebsmodus automatisch bzw. selbsttätig durch die Fahrerassistenzeinrichtung und somit fahrerunabhängig gestartet wird. Die Fahrerassistenzeinrichtung kann beispielsweise die momentan erfassten Sensordaten fortlaufend mit den Referenzdaten vergleichen und anhand von momentan erfassten Sensordaten den Umgebungsbereich selbsttätig erkennt. Nach Identifikation des Umgebungsbereichs kann die Fahrerassistenzeinrichtung eine Information an den Fahrer ausgeben, mit welcher der Fahrer über die Möglichkeit des Einparkens in die Parklücke informiert wird. Der Fahrer kann dann den tatsächlichen Vorgang des Einparkens mithilfe einer Eingabeeinrichtung bestätigen und einleiten oder nicht.

In einer Ausführungsform wird in dem Lernmodus auch eine Referenzstartposition durch die Fahrerassistenzeinrichtung erfasst, aus welcher heraus das Kraftfahrzeug im Lernmodus bewegt wird. Es können in der Fahrerassistenzeinrichtung Daten mit Informationen über die Referenzstartposition bezüglich der Referenzzielposition bzw. bezüglich des Umgebungsbereichs abgespeichert werden. Dann kann die Fahrerassistenzeinrichtung im Betriebsmodus die Parkbahn auch unter Berücksichtigung der Referenzstartposition festlegen. Die Fahrerassistenzeinrichtung kann sich somit an der Referenzstartposition orientieren, aus welcher heraus das Kraftfahrzeug bereits einmal in die Parklücke eingeparkt worden ist, nämlich im Lernmodus durch den Fahrer.

Es erweist sich als besonders vorteilhaft, wenn ausgehend von der Referenzstartposition in dem Lernmodus eine Referenzbahn, entlang welcher das Kraftfahrzeug im Lernmodus in die Parklücke geführt wird, durch die Fahrerassistenzeinrichtung erfasst wird. Die Fahrerassistenzeinrichtung kann dann Daten mit Informationen über einen Verlauf der Referenzbahn abspeichern, und sie kann in dem Betriebsmodus die Parkbahn auch unter Berücksichtigung des Verlaufs der Referenzbahn festlegen. Diese Ausführungsform hat den Vorteil, dass sich die Fahrerassistenzeinrichtung an der bereits befahrenen und bekannten Referenzbahn bei der Festlegung der neuen Parkbahn orientieren kann. Die Fahrerassistenzeinrichtung kann beispielsweise zumindest einen Bereich der Referenzbahn für die neue Parkbahn übernehmen, sodass der Rechenaufwand bei der Festlegung der benötigten Parkbahn auf ein Minimum reduziert wird. Der Verlauf der Referenzbahn liefert auch zusätzliche Informationen über die mögliche Wegstrecke, entlang welcher das Kraftfahrzeug in die Parklücke problemlos eingeparkt werden kann. Unter Berücksichtigung der bereits aufgezeichneten Referenzbahn kann somit die neue Parkbahn besonders einfach und zielführend festgelegt werden.

Es kann in dem Betriebsmodus beispielsweise eine solche Parkbahn festgelegt werden, die mit der Referenzbahn zumindest in einem Endbereich zusammenfällt. Dann wird das Kraftfahrzeug entlang der Parkbahn auf die Referenzbahn geführt. Bei dieser Ausführungsform muss die Fahrerassistenzeinrichtung demnach lediglich einen Anfangsbereich der Parkbahn neu berechnen, und es wird der Endbereich der abgelegten Referenzbahn genutzt. Auf diesem Wege gelingt es, eine besonders zuverlässige und zielführende Parkbahn festzulegen, die auf der bekannten und - da durch den Fahrer alleine befahrenen - zuverlässigen Referenzbahn aufbaut. Der Aufwand hinsichtlich der Berechnung der neuen Parkbahn ist somit auf ein Minimum reduziert.

Es wird bevorzugt eine solche Parkbahn festgelegt, die sich der Referenzbahn stetig bzw. kontinuierlich zunehmend annähert, bis sie mit der Referenzbahn zusammenfällt. Auf diese Weise kann der Vorgang des Einparkens besonders benutzerfreundlich durchgeführt werden; die festgelegte Parkbahn sorgt für ein komfortables und stetiges, wie auch optisch ansprechendes Einparken, nämlich ohne einen sprunghaften Verlauf der festgelegten Parkbahn. Eine stetige Annäherung der festgelegten Parkbahn an die Referenzbahn kann beispielsweise so aussehen, dass nach jeweils einer durch das Kraftfahrzeug zurückgelegten Wegstrecke von beispielsweise 1 m sich ein Abstand zwischen der festgelegten Parkbahn und der Referenzbahn um einen Abstandswert aus einem Wertebereich von 10 cm bis 100 cm kontinuierlich verringert. Nach einem jeden Meter des zurückgelegten Weges kann sich somit der Abstand zwischen der Parkbahn und der Referenzbahn um einen Abstandswert von 10 cm oder 20 cm oder 30 cm oder 40 cm oder 50 cm oder 60 cm oder 70 cm oder 80 cm oder 90 cm oder 100 stetig verringern.

Es kann in dem Betriebsmodus beispielsweise eine solche Parkbahn festgelegt werden, die sich an die Referenzbahn an einem Punkt anschließt bzw. welche die Referenzbahn an einem Punkt trifft, an welchem die Fahrzeuglängsachse - wenn sich das Kraftfahrzeug entlang der festgelegten Parkbahn bewegt - mit der Fahrzeuglängsachse - wenn sich das Kraftfahrzeug entlang der Referenzbahn bewegt - einen Winkel einschließt, der kleiner als ein vorbestimmter Winkelwert ist. Der Winkelwert kann beispielsweise in einem Wertebereich von 1 °bis 20° liegen; er kann beispielsweise 1° oder 3° oder 6° oder 9° oder 12° oder 15° oder 17° oder 20° betragen. Dann ist nämlich gewährleistet, dass sich die festgelegte Parkbahn der Referenzbahn quasi asymptotisch annähert, bis sie die Referenzbahn erreicht und mit ihr zusammenfällt.

Allgemein gesagt kann sich also die festgelegte Parkbahn der Referenzbahn asymptotisch annähern, bis sie mit der Referenzbahn an einem bestimmten Punkt zusammenfällt.

Bei der Festlegung der Parkbahn kann die Fahrerassistenzeinrichtung auch die Referenzdaten berücksichtigen, und zwar die jeweiligen relativen Positionen von Referenzobjekten relativ zueinander und/oder bezüglich der Referenzstartposition bzw. der Referenzbahn. Die Fahrerassistenzeinrichtung kann auch die momentan erfassen Sensordaten berücksichtigen. Die Fahrerassistenzeinrichtung kann dann eine solche Parkbahn festlegen, welche für ein kollisionsfreies Einparken in die Parklücke sorgt.

Alternativ zu der oben beschriebenen Ausführungsform - bei welcher die Referenzbahn aufgezeichnet wird und die Parkbahn unter Berücksichtigung der Referenzbahn berechnet wird - kann vorgesehen sein, dass ausschließlich abhängig von der aktuellen Position des Kraftfahrzeugs relativ zur Referenzzielposition und/oder Referenzstartposition sowie unter Berücksichtigung der Referenzdaten über den Umgebungsbereich und/oder unter Berücksichtigung der Sensordaten die Parkbahn vollständig neu festgelegt wird. Bei dieser Ausführungsform wird die Parkbahn unabhängig von einer Referenzbahn jeweils von neuem berechnet. Diese Ausführungsform hat den Vorteil, dass einerseits keine Referenzbahn aufgezeichnet werden muss und andererseits die Fahrerassistenzeinrichtung eine nach bestimmten Kriterien jeweils optimale Parkbahn berechnen kann, ohne dass sie auf eine vom Fahrer selbst befahrene Referenzbahn beschränkt ist. Diese Ausführungsform kann beispielsweise in einem solchen Ablauf verwirklicht werden: Die Fahrerassistenzeinrichtung unterstützt den Fahrer beim Einparken in seine eigene Garage. In der Fahrerassistenzeinrichtung sind Referenzdaten über einen Umgebungsbereich der Garage abgelegt. Die Referenzdaten wurden durch eine Kamera der Sensoreinrichtung erfasst. Die Referenzdaten sind somit Bilddaten oder aus Bilddaten der Kamera gewonnene bzw. durch eine Bildverarbeitung erzeugte Daten. Die Referenzdaten beinhalten Informationen über Referenzmerkmale des Umgebungsbereichs der Garage, nämlich beispielsweise über die geometrische Form von im Umgebungsbereich befindlichen Referenzobjekten, über die jeweiligen relativen Positionen der Referenzobjekte relativ zueinander und über eine Farbgebung der Referenzobjekte. Der Fahrer hält nun mit dem Kraftfahrzeug in der Nähe der Garage an, sodass sich die Garage außerhalb eines Erfassungsbereichs der Sensoreinrichtung befindet. Die Kamera der Sensoreinrichtung erfasst nun Sensordaten über die Umgebung des Kraftfahrzeugs. Die Fahrerassistenzeinrichtung vergleicht nun die Sensordaten mit den abgelegten Referenzdaten. Die Fahrerassistenzeinrichtung kann beispielsweise die momentan erfassten Sensordaten einer Merkmalserkennung beziehungsweise einer Mustererkennung hinsichtlich der in den Referenzdaten enthaltenen Referenzmerkmale unterziehen. Auf diese Weise kann die Fahrerassistenzeinrichtung den Umgebungsbereich der Garage erkennen. Die Fahrerassistenzeinrichtung vermittelt anhand der Sensordaten die aktuelle Position des Kraftfahrzeugs in dem Umgebungsbereich der Garage und kann auch die relative Position des Kraftfahrzeugs relativ zur Referenzstartposition, aus welcher heraus das Kraftfahrzeug in dem Lernmodus eingeparkt wurde, und zur Referenzzielposition ermitteln. Abhängig von dieser aktuellen Position des Kraftfahrzeugs bezüglich der Referenzstartposition und/oder bezüglich der Referenzzielposition, wie auch unter Berücksichtigung der Referenzdaten und/oder der Sensordaten - nämlich unter Berücksichtigung der jeweiligen Positionen von Objekten in dem Umgebungsbereich - berechnet die Fahrerassistenzeinrichtung eine neue Parkbahn, entlang welcher das Kraftfahrzeug in die Garage eingeparkt werden kann. Kann eine kollisionsfreie Parkbahn berechnet werden, so gibt die Fahrerassistenzeinrichtung an den Fahrer eine Information darüber aus, dass der Vorgang des Einparkens gestartet werden kann. Der Fahrer kann nun beispielsweise durch Betätigen einer Bedieneinrichtung den Vorgang des Einparkens einleiten oder nicht. Wird der Parkvorgang eingeleitet, so greift die Fahrerassistenzeinrichtung in den Antriebsstrang sowie in eine Lenkeinrichtung des Kraftfahrzeugs ein und führt den Einparkvorgang automatisch beziehungsweise autonom durch.

Wie bereits ausgeführt, kann zur Erkennung des Umgebungsbereichs zumindest ein in den Referenzdaten angegebenes Referenzmerkmal des Umgebungsbereichs anhand der Sensordaten erkannt werden. Also können in den Referenzdaten Referenzmerkmale des Umgebungsbereichs angegeben sein. Die aktuell erfassten Sensordaten können dann durch die Fahrerassistenzeinrichtung einer Merkmalserkennung hinsichtlich der abgelegten Referenzmerkmale unterzogen werden. Dies kann beispielsweise so erfolgen, dass zur Identifizierung des Umgebungsbereichs eine vorbestimmte Anzahl von Referenzmerkmalen erkannt wird. Auf diese Art und Weise kann der Umgebungsbereich der Parklücke durch die Fahrerassistenzeinrichtung zuverlässig beziehungsweise mit einer hohen Wahrscheinlichkeit und mit einer entsprechend geringen Fehlerrate identifiziert werden.

Prinzipiell kann der Umgebungsbereich auch anhand von Referenzmerkmalen der Parklücke beziehungsweise von Referenzmerkmalen von die Parklücke unmittelbar begrenzenden Objekten erkannt werden. Die Fahrerassistenzeinrichtung kann den Umgebungsbereich anhand von Referenzmerkmalen jedoch auch dann erkennen, wenn die Parklücke beziehungsweise die die Parklücke begrenzenden Objekte durch die Sensoreinrichtung momentan nicht erfasst werden kann beziehungsweise können. Also kann die Fahrerassistenzeinrichtung den Umgebungsbereich der Parklücke und somit mittelbar auch die Parklücke selbst ausschließlich anhand von Referenzmerkmalen von Referenzobjekten erkennen, die von den die Parklücke unmittelbar begrenzenden Objekten unterschiedliche beziehungsweise separate Objekte sind. Der Fahrer kann somit mit seinem Kraftfahrzeug praktisch an einer beliebigen Stelle anhalten, an welcher die Sensoreinrichtung die in dem Umgebungsbereich befindlichen Referenzobjekte erfassen kann. Dabei muss die Sensoreinrichtung die Parklücke selbst beziehungsweise die die Parklücke begrenzenden Objekte nicht erfassen können.

Bei den Referenzmerkmalen, anhand deren der Umgebungsbereich der Parklücke erkannt wird, kann es sich beispielsweise um zumindest eines der folgenden Referenzmerkmale handeln:
- eine relative Position eines Referenzobjektes bezüglich eines anderen Referenzobjektes und/oder bezüglich der Parklücke und/oder
- eine geometrische Form zumindest eines Referenzobjekts und/oder
- eine Farbgebung zumindest eines Referenzobjekts.
Anhand von solchen Referenzmerkmalen gelingt es nämlich, den Umgebungsbereich der Parklücke eindeutig zu identifizieren.

Zur Erfassung der Referenzdaten und/oder der Sensordaten kann die Steuereinrichtung beispielsweise zumindest eine Kammer und/oder zumindest einen Ultraschallsensor umfassen. Die Referenzdaten und/oder die Sensordaten können jedoch ergänzend oder alternativ auch mithilfe eines Radargeräts und/oder eines Lidargeräts erfasst werden. Während mithilfe eines Ultraschallsensors jeweilige Entfernungen von Referenzobjekten zum Kraftfahrzeug und zueinander besonders genau erfasst werden können, können mithilfe von Bilddaten einer Kamera auch weitere Referenzmerkmale identifiziert werden, wie beispielsweise die geometrische Form von Referenzobjekten oder aber die Farbgebung.

Die Sensoreinrichtung kann auch während des Vorgangs des Einparkens - nämlich im Betriebsmodus - Sensordaten erfassen. Anhand der Sensordaten können dann Entfernungen des Kraftfahrzeugs zu erfassten Objekten bestimmt werden, und die zuvor festgelegte Parkbahn kann dann gegebenenfalls korrigiert werden. Die Parkbahn kann beispielsweise nach Erfülltsein eines auf die Entfernungen bezogenen vorbestimmten Korrekturkriteriums korrigiert werden. Also kann abhängig von zumindest einer der erfassten Entfernungen die ursprünglich bestimmte Parkbahn korrigiert werden. Ist das Korrekturkriterium erfüllt, so wird die Parkbahn überplant, nämlich vorzugsweise auch abhängig von den erfassten Entfernungen. Dieser Ausführungsform liegt die Tatsache zugrunde, dass während des Vorgangs des Einparkens auch neue unbekannte Objekte in den Umgebungsbereich der Parklücke beziehungsweise in die Umgebung des Kraftfahrzeugs gelangen können. Die gegebenenfalls vorgenommene Korrektur der Parkbahn sorgt also für ein kollisionsfreies Einparken des Kraftfahrzeugs in die Parklücke. Es können nämlich gegebenenfalls in den Umgebungsbereich eintretende Objekte erfasst und durch das Kraftfahrzeug entsprechend umfahren werden. Das vorbestimmte Korrekturkriterium kann beispielsweise die Bedingung beinhalten, dass eine erfasste Entfernung einen vorgegebenen Grenzwert unterschreitet. Dieser Grenzwert kann beispielsweise in einem Wertebereich von 10 cm bis 50 cm liegen; er kann beispielsweise 30 cm betragen.

Die Referenzdaten werden während des Vorgangs des Einparkens vorzugsweise fortlaufend beziehungsweise kontinuierlich erfasst, so dass durch die Fahrerassistenzeinrichtung fortlaufend überprüft wird, ob neue Objekte in die Umgebung des Kraftfahrzeugs gelangen.

Prinzipiell kann die Fahrerassistenzeinrichtung den Fahrer beim Einparken in die Parklücke lediglich semi-autonom unterstützen. Dies bedeutet, dass die Fahrerassistenzeinrichtung lediglich optische und/oder akustische Informationen an den Fahrer ausgibt, wie er das Kraftfahrzeug zu lenken hat, um das Kraftfahrzeug entlang der festgelegten Parkbahn in die Parklücke zu führen. Es erweist sich jedoch als besonders vorteilhaft, wenn die Fahrerassistenzeinrichtung eine vollständig autonome beziehungsweise automatische Fahrerassistenzeinrichtung ist. Dann kann die Fahrerassistenzeinrichtung auch unter Ausgabe entsprechender Steuersignale an eine Lenkeinrichtung das Kraftfahrzeug automatisch lenken, so dass es in die Parklücke eingeparkt wird. Ergänzend kann die Fahrerassistenzeinrichtung auch in den Antriebsstrang eingreifen und das Kraftfahrzeug beschleunigen beziehungsweise abbremsen.

Eine erfindungsgemäße Fahrerassistenzeinrichtung ist zum Unterstützen eines Fahrers eines Kraftfahrzeugs beim Einparken in eine Parklücke, insbesondere in eine Garage, ausgebildet. Die Fahrerassistenzeinrichtung kann in einem Lernmodus Referenzdaten über einen Umgebungsbereich der Parklücke erfassen und abspeichern, während das Kraftfahrzeug durch den Fahrer gesteuert in die Parklücke eingeparkt wird. Die Fahrerassistenzeinrichtung kann in dem Lernmodus außerdem eine Referenzzielposition, welche durch das Kraftfahrzeug im Lernmodus erreicht wird, erfassen und Daten mit Informationen über die Referenzzielposition - insbesondere bezüglich des Umgebungsbereichs - abspeichern. In einem nachfolgenden von dem Lernmodus unterschiedlichen Betriebmodus erfasst die Fahrerassistenzeinrichtung Sensordaten und vergleicht sie mit den Referenzdaten. Abhängig von diesem Vergleich kann die Fahrerassistenzeinrichtung den Umgebungsbereich der Parklücke anhand der erfassten Sensordaten erkennen und hierdurch eine aktuelle Position des Kraftfahrzeugs relativ zur Referenzzielposition bestimmen. Abhängig von der aktuellen Position des Kraftfahrzeugs relativ zur Referenzzielposition legt die Fahrerassistenzeinrichtung eine Parkbahn fest, entlang welcher das Kraftfahrzeug aus der aktuellen Position heraus in die Parklücke eingeparkt wird.

Die Erfindung betrifft auch ein Kraftfahrzeug, welches eine erfindungsgemäße Fahrerassistenzeinrichtung umfasst.

Die mit Bezug auf das erfindungsgemäße Verfahren vorgestellten bevorzugten Ausführungsformen und deren Vorteile gelten entsprechend für die erfindungsgemäße Fahrerassistenzeinrichtung, wie auch für das erfindungsgemäße Kraftfahrzeug. Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder auch in Alleinstellung verwendbar.

Die Erfindung wird nun anhand einzelner bevorzugter Ausführungsbeispiele, wie auch unter Bezugnahme auf die beigefügten Zeichnungen näher erläutert.

Es zeigen:
- Fig. 1: in schematischer Darstellung ein Kraftfahrzeug mit einer Fahrerassistenzeinrichtung gemäß einer Ausführungsform der Erfindung;
- Fig. 2: in schematischer Darstellung eine Draufsicht auf ein Einparkszenario, wobei die Funktionsweise der Fahrerassistenzeinrichtung in einem Lernmodus näher erläutert wird;
- Fig. 3: in schematischer Darstellung eine Draufsicht auf das Szenario gemäß Fig. 2, wobei die Funktionsweise der Fahrerassistenzeinrichtung in einem Betriebsmodus näher erläutert wird;
- Fig. 4: in schematischer Darstellung eine Draufsicht auf ein Einparkszenario, wobei ein Verfahren gemäß einer weiteren Ausführungsform der Erfindung näher erläutert wird;
- Fig. 5: in schematischer Darstellung eine Anzeige auf einem Bildschirm der Fahrerassistenzeinrichtung; und
- Fig. 6: in schematischer Darstellung eine Draufsicht auf das Einparkszenario gemäß Fig. 4, wobei sich das Kraftfahrzeug bereits teilweise in einer Garage befindet.

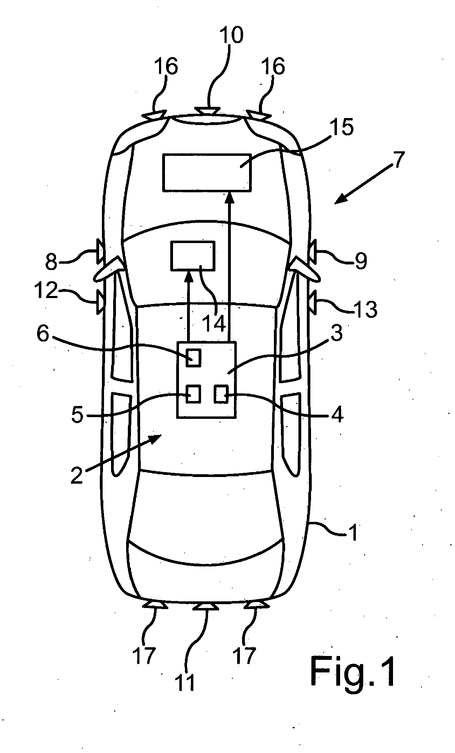

Ein in Fig. 1 in schematischer Darstellung gezeigtes Kraftfahrzeug 1 ist im Ausführungsbeispiel ein Personenkraftwagen. Das Kraftfahrzeug 1 umfasst eine Fahrerassistenzeinrichtung 2, die zum Unterstützten eines Führers des Kraftfahrzeugs 1 beim Einparken in eine eigene Garage beziehungsweise auf einem eigenen Stellplatz ausgebildet ist. Allgemein gesagt dient die Fahrerassistenzeinrichtung 2 zum Unterstützen des Fahrers beim Einparken in eine häufig - beispielsweise täglich - angefahrene Parklücke.

Die Fahrerassistenzeinrichtung 2 umfasst eine Steuereinrichtung 3, die einen Speicher 4, einen digitalen Signalprozessor 5 sowie einen Mikrocontroller 6 umfassen kann. Die Fahrerassistenzeinrichtung 2 beinhaltet außerdem eine Sensoreinrichtung 7, deren Sensoren an der äußeren Oberfläche des Kraftfahrzeugs 1 montiert sind. Die Sensoreinrichtung 7 umfasst zwei jeweils an einer Seitenflanke des Kraftfahrzeugs 1 angebrachte Ultraschallsensoren 8, 9, wie auch eine Vielzahl von Kameras 10, 11, 12, 13. Im Ausführungsbeispiel sind die Anzahl und die Anordnung der Kameras 10, 11, 12, 13 lediglich beispielhaft dargestellt. Und zwar ist eine Kamera 10 am vorderen Stoßfänger des Kraftfahrzeugs 1 angebracht; eine Kamera 11 ist am hinteren Stoßfänger angebracht; eine Kamera 12 ist an der linken Seitenflanke oder aber am linken Außenspiegel montiert, während eine Kamera 13 an der rechten Seitenflanke beziehungsweise am rechten Außenspiegel montiert ist. Die Kameras 10, 11, 12, 13 können relativ breite Erfassungswinkel aufweisen; sie können Fischaugenkameras sein. Mithilfe der Kameras 10, 11, 12 13 kann die gesamte Umgebung um das Kraftfahrzeug 1 herum erfasst werden.

Auch an dem vorderen und dem hinteren Stoßfänger können Ultraschallsensoren 16, 17 angeordnet sein, die Entfernungen von in der Umgebung des Kraftfahrzeugs 1 befindlichen Objekten zum Kraftfahrzeug 1 erfassen.

Die Sensoreinrichtung 7, also sowohl die Ultraschallsensoren 8, 9, 16, 17 als auch die Kameras 10, 11, 12, 13 erfassen Daten über die Umgebung des Kraftfahrzeugs 1 und übermitteln die erfassten Daten an die Steuereinrichtung 3. Diese kann die erfassten Daten verarbeiten und abhängig von einem Ergebnis der Datenverarbeitung dann den Fahrer beim Einparken unterstützen.

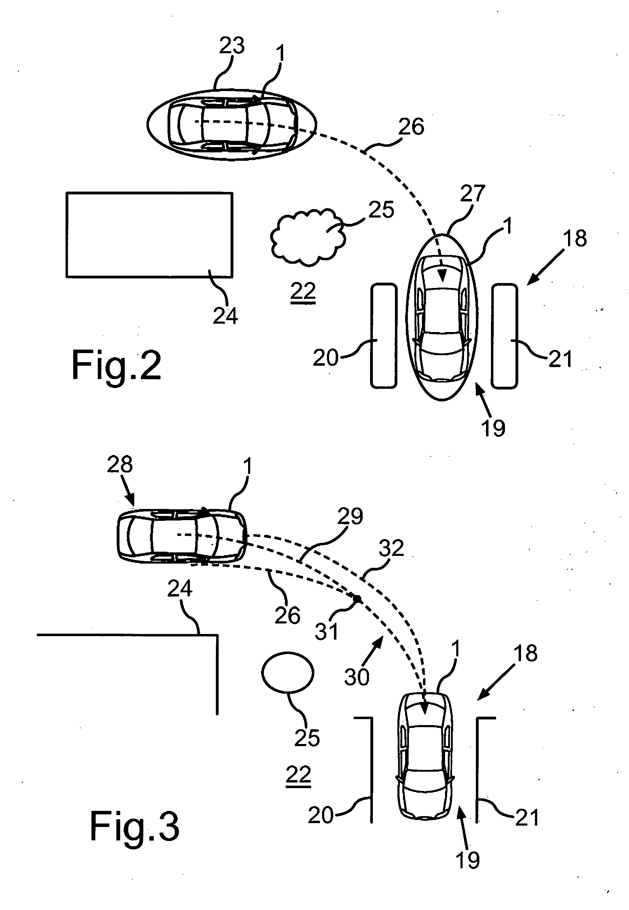

In dem Kraftfahrzeug 1 befindet sich außerdem eine optische Anzeigeeinrichtung 14, mittels welcher dem Fahrer optische Informationen angezeigt werden können. Die Anzeigeeinrichtung 14 wird durch die Steuereinrichtung 3 angesteuert. Die Steuereinrichtung 3 kann außerdem Steuersignale an eine Lenkeinrichtung 15 des Kraftfahrzeugs 1 ausgeben, um die lenkbaren Räder des Kraftfahrzeugs 1 zu lenken. Bezug nehmend nun auf die Figuren 2 und 3 wird nachfolgend ein Verfahren gemäß einer Ausführungsform der Erfindung näher erläutert. Das Verfahren dient zum Unterstützen des Fahrers beim Einparken des Kraftfahrzeugs 1 in eine Garage 18 beziehungsweise einen Stellplatz. Die Garage 18 beinhaltet eine Parklücke 19, die im vorliegenden Fall durch Seitenwände 20, 21 unmittelbar begrenzt ist. Das Kraftfahrzeug 1 soll in die Parklücke 19 eingeparkt werden. Das Verfahren ist jedoch nicht auf eine Garage 18 beschränkt; die Fahrerassistenzeinrichtung 2 kann den Fahrer auch beim Einparken in andere Parklücken unterstützen, nämlich insbesondere in solche Parklücken, die durch andere Objekte - wie Kraftfahrzeuge - oder aber durch Straßenmarkierungen oder dergleichen seitlich unmittelbar begrenzt sind.

Zunächst wird die Fahrerassistenzeinrichtung 2 in einen Lernmodus verbracht. Dies kann beispielsweise aufgrund einer Eingabe des Fahrers erfolgen, also zum Beispiel durch Betätigung einer Bedieneinrichtung. Im Lernmodus wird ein Umgebungsbereich 22 der Parklücke 19 durch die Fahrerassistenzeinrichtung 2 eingelernt. Zum Umgebungsbereich 22 der Parklücke 19 gehören auch die seitlichen Begrenzungen der Parklücke 19, also im vorliegenden Fall die Seitenwände 20, 21. Im Lernmodus wird das Kraftfahrzeug 1 durch den Fahrer manuell in die Garage 18 einmal eingeparkt. Die Sensoreinrichtung 7 erfasst dabei ausgehend von einer Referenzstartposition 23, aus welcher heraus das Kraftfahrzeug 1 im Lernmodus bewegt wird, Referenzdaten über den Umgebungsbereich 22. Diese Referenzdaten werden in der Fahrerassistenzeinrichtung 2 abgespeichert, nämlich im Speicher 4 der Steuereinrichtung 3.

Hinsichtlich der Erfassung des Umgebungsbereichs 22 sind prinzipiell unterschiedlichste Ausführungsformen sinnvoll möglich. Die Sensoreinrichtung 7 kann den Umgebungsbereich 22 mithilfe der Kameras 10, 11, 12, 13 erfassen. Ergänzend oder alternativ kann der Umgebungsbereich 22 auch durch die Ultraschallsensoren 8, 9, 16, 17 erfasst werden.

Zunächst erfasst die Fahrerassistenzeinrichtung 2 die Referenzstartposition 23 im Umgebungsbereich 22. Die Sensoreinrichtung 7 erfasst auch Referenzobjekte, die sich im Umgebungsbereich 22 befinden, nämlich ein erstes Referenzobjekt 24, wie auch ein zweites Referenzobjekt 25. Im Ausführungsbeispiel ist das erste Referenzobjekt 24 beispielsweise ein Gebäude, während das zweite Referenzobjekt 25 ein Baum ist. Die Sensoreinrichtung 7 erfasst die Referenzdaten auch während des Vorgangs des Einparkens im Lernmodus. Die Referenzdaten werden also fortlaufend durch die Sensoreinrichtung 7 erfasst und im Speicher 4 abgelegt, so dass eine vollständige Abbildung des Umgebungsbereichs 22 entsteht.

Im Lernmodus wird das Kraftfahrzeug 1 durch den Fahrer gesteuert entlang einer Referenzbahn 26 eingeparkt, also entlang einer durch den Fahrer selbst festgelegten Bahn. Es sind nun zwei verschiedene Ausführungsformen vorgesehen: Die Fahrerassistenzeinrichtung 2 kann den Verlauf der Referenzbahn 26 erfassen, und eine Information über den Verlauf bzw. die Form der Referenzbahn 26 kann im Speicher 4 abgespeichert werden. Bei dieser Ausführungsform erfasst die Fahrerassistenzeinrichtung 2 also sowohl den Verlauf der Referenzbahn 26 als auch die Referenzstartposition 23 bezüglich der Referenzobjekte 20, 21, 24, 25 sowie eine Referenzzielposition 27 bezüglich der Referenzobjekte 20, 21, 24, 25, weiche durch das Kraftfahrzeug 1 in der Garage 18 erreicht wird. In einer alternativen Ausführungsform kann die Fahrerassistenzeinrichtung 2 unter Verzicht auf die Erfassung des Verlaufs bzw. der Form der Referenzbahn 26 lediglich die Referenzstartposition 23 bezüglich der Referenzobjekte 20, 21, 24, 25 sowie die Referenzzielposition 27 bezüglich der Referenzobjekte 20, 21, 24, 25 beziehungsweise bezüglich der Referenzstartposition 23 erfassen.

Wie bereits ausgeführt, erfasst die Sensoreinrichtung 7 die Referenzdaten fortlaufend während des gesamten Vorgangs des Einparkens im Lernmodus. Nähert sich das Kraftfahrzeug 1 im Lernmodus der Garage 18, so gelangen auch die Seitenwände 20, 21 sowie weitere, die Garage 18 bildende Objekte in den Erfassungsbereich der Sensoreinrichtung 7. Auch diese Objekte - nämlich die Seitenwände 20, 21 und dergleichen - werden durch die Fahrerassistenzeinrichtung 2 erfasst und als Referenzobjekte interpretiert.

Der Lernmodus der Fahrerassistenzeinrichtung 2 kann auch beispielsweise aufgrund einer Eingabe abgeschlossen werden, die der Fahrer an einer Bedieneinrichtung vornimmt. Zum Beispiel kann der Fahrer einen Knopf betätigen, um den Lernmodus auszuschalten.

Also erfasst die Fahrerassistenzeinrichtung 2 im Lernmodus Referenzdaten, die Informationen über den Umgebungsbereich 22 der Parklücke 19 beinhalten. Die Referenzdaten bilden insgesamt quasi eine digitale Umgebungskarte des Umgebungsbereichs 22. In den Referenzdaten sind Referenzmerkmale des Umgebungsbereichs 22 beschrieben. Diese Referenzmerkmale können beispielsweise die relative Position der Referenzobjekte 20, 21, 24, 25 relativ zueinander, wie auch die jeweilige geometrische Form der Referenzobjekte 20, 21, 24, 25 sowie die jeweilige Farbgebung der Referenzobjekte 20, 21, 24, 25 beinhalten. Der Abstraktionsgrad der Darstellung der Referenzobjekte 20, 21, 24, 25 in den Referenzdaten kann auch unterschiedlich sein. Zum Beispiel können die Referenzdaten lediglich Informationen über vereinfachte Konturen der Referenzobjekte 20, 21, 24, 25 beinhalten, wie dies schematisch in Fig. 3 gezeigt ist.

Die Fahrerassistenzeinrichtung 2 unterstützt den Fahrer beim Einparken in die Garage 18 in einem Betriebsmodus. Der Betriebsmodus kann in einer Ausführungsform ebenfalls wie der Lernmodus aufgrund einer Eingabe von Seiten des Fahrers aktiviert werden. Alternativ kann der Betriebsmodus auch automatisch aktiviert werden, und die Fahrerassistenzeinrichtung 2 kann anhand von aktuell erfassten Sensordaten der Sensoreinrichtung 7 fortlaufend überprüfen, ob die aktuelle Umgebung des Kraftfahrzeugs 1 dem Umgebungsbereich 22 entspricht. Der Betriebsmodus wird nachfolgend unter Bezugnahme auf Fig. 3 näher erläutert.

Der Fahrer hält mit dem Kraftfahrzeug 1 in einer Anfangsposition 28 an, um das Kraftfahrzeug 1 in die Garage 18 einzuparken zu lassen, nämlich mithilfe der Fahrerassistenzeinrichtung 2. Die Sensoreinrichtung 7 erfasst nun Sensordaten über die Umgebung des Kraftfahrzeugs 1. Diese Sensordaten werden nun durch die Steuereinrichtung 3 einer Merkmalserkennung bzw. Mustererkennung hinsichtlich jedes abgelegten Referenzmerkmals unterzogen, und die Steuereinrichtung 3 überprüft, ob die aktuelle Umgebung des Kraftfahrzeugs 1 als der Umgebungsbereich 22 der Parklücke 19 identifiziert werden kann oder nicht. Da sich im Ausführungsbeispiel gemäß Fig. 3 das Kraftfahrzeug 1 unmittelbar in der Nähe der Referenzobjekte 24, 25 befindet, stellt die Steuereinrichtung 3 anhand der abgelegten Referenzmerkmale des Umgebungsbereichs 22 fest, dass es sich bei der Umgebung des Kraftfahrzeugs 1 um den Umgebungsbereich 22 der Parklücke 19 handelt. Die Steuereinrichtung 3 erfasst also die Referenzobjekte 24, 25 nämlich auch dann, wenn die Parklücke 19 selbst durch die Sensoreinrichtung 7 nicht erfasst werden kann.

Ausgehend von der aktuellen Anfangsposition 28 des Kraftfahrzeugs 1, die von der Referenzstartposition 23 unterschiedlich ist, berechnet die Steuereinrichtung 3 eine Parkbahn, entlang welcher das Kraftfahrzeug 1 in die Garage eingeparkt werden kann. Hier sind im Wesentlichen zwei verschiedene Ausführungsformen vorgesehen, nämlich je nachdem, ob der Verlauf der Referenzbahn 26 in der Steuereinrichtung 3 abgelegt ist oder nicht.

Ist der Verlauf der Referenzbahn 26 in der Steuereinrichtung 3 abgelegt, so werden der Berechnung einer neuen Parkbahn 29 folgende Informationen zugrunde gelegt: die Referenzstartposition 23, die Referenzzielposition 27, der Verlauf der Referenzbahn 26, die aktuelle Anfangsposition 28 des Kraftfahrzeugs 1 bezüglich der Referenzbahn 26 sowie die momentan aufgezeichneten Sensordaten. In dem Fall berechnet die Steuereinrichtung 3 die Parkbahn 29 also unter Berücksichtigung der Referenzbahn 26. Man kann nämlich davon ausgehen, dass eine durch den Fahrer selbst zuvor befahrene Bahn - die Referenzbahn 26 - eine zuverlässige und zielführende Bahn ist. Und zwar wird durch die Steuereinrichtung 3 eine solche Parkbahn 29 für den Einparkvorgang festgelegt, die in einem Endbereich 30 - im Ausführungsbeispiel etwa in der zweiten Hälfte - mit der Referenzbahn 26 zusammenfällt. Das Kraftfahrzeug 1 wird also auf die ursprüngliche Referenzbahn 26 geführt, und zwar derart, dass sich die aktuelle Parkbahn 29 der Referenzbahn 26 stetig zunehmend annähert. Somit sind sprunghafte Verläufe der Parkbahn 29 ausgeschlossen; die neue Parkbahn 29 nähert sich der Referenzbahn 26 asymptotisch an und trifft die Referenzbahn 26 an einem Punkt 31. Der Punkt 31 ist also auf eine solche Weise festgelegt, dass die Fahrzeuglängsachsewenn sich das Kraftfahrzeug 1 entlang der Parkbahn 29 bewegt - mit der Fahrzeuglängsachse - wenn sich das Kraftfahrzeug 1 entlang der Referenzbahn 26 bewegt - einen Winkel einschließt, der kleiner als beispielsweise 10° ist. Auf diesem Wege gelingt es, einen komfortablen Einparkvorgang anzubieten.

Ist in der Steuereinrichtung 3 hingegen keine Information über den Verlauf der Referenzbahn 26 abgelegt, so berechnet die Steuereinrichtung 3 eine von der Referenzbahn 26 vollständig unabhängige Parkbahn 32. Die Parkbahn 32 wird also jeweils vollständig von neuem berechnet. Der Berechnung der Parkbahn 32 werden folgende Informationen zugrunde gelegt: die Referenzstartposition 23 bezüglich der Referenzobjekte 20, 21, 24, 25, die Referenzzielposition 27 bezüglich der Referenzstartposition 23, die aktuelle Anfangsposition 28 des Kraftfahrzeugs 1 bezüglich der Referenzstartposition 23 bzw. der Referenzzielposition 27 sowie die aktuell aufgezeichneten Sensordaten. Also kann sich bei dieser Ausführungsform die Steuereinrichtung 3 an der Referenzstartposition 23 sowie der Referenzzielposition 27 orientieren. Die Steuereinrichtung 3 berechnet hier eine solche Parkbahn 32, die das Kraftfahrzeug 1 kollisionsfrei in die Garage 18 führt.

Sowohl bei der Parkbahn 29 als auch bei der Parkbahn 32 überwacht die Steuereinrichtung 3 fortlaufend die Umgebung des Kraftfahrzeugs 1. Die Steuereinrichtung 3 überprüft kontinuierlich, ob andere Objekte in die Umgebung des Kraftfahrzeugs 1 gelangen. Unterschreitet die Entfernung eines erfassten Objekts zum Kraftfahrzeug 1 einen vorbestimmten Grenzwert - beispielsweise 30 cm -, so kann die Steuereinrichtung 3 die festgelegte Parkbahn 29, 32 korrigieren. Dies wird auf eine solche Art und Weise durchgeführt, dass das Objekt durch das Kraftfahrzeug 1 in einem sicheren Abstand umfahren wird. Alternativ kann das Kraftfahrzeug 1 auch abgebremst werden, und die Steuereinrichtung 3 kann abwarten, bis das Objekt aus der Umgebung des Kraftfahrzeugs 1 verschwindet.

Beim Anfahren der Garage 18 werden durch die Steuereinrichtung 3 auch seitliche Abstände des Kraftfahrzeugs 1 zu den Seitenwänden 20, 21 berücksichtigt, die durch die seitlichen Ultraschallsensoren 8, 9 gemessen werden. Ausgehend von einer Position des Kraftfahrzeugs 1, in welcher sich die seitlichen Ultraschallsensoren 8, 9 bereits in der Garage 18 befinden, also die Abstände zu den Seitenwänden 20, 21 erfassen können, kann das Kraftfahrzeug 1 geregelt bis zur Zielposition in der Garage 18 geführt werden. Und zwar kann diese Regelung im Hinblick darauf erfolgen, dass die seitlichen Abstände des Kraftfahrzeugs 1 zu den Seitenwänden 20, 21 gleich sind. Befinden sich in der Garage 18 zusätzliche Objekte, so erfolgt diese Regelung beispielsweise derart, dass die seitlichen Abstände des Kraftfahrzeugs 1 zu dem jeweils nächstliegenden Objekt in der Garage - sei dieses Objekt eine der Seitenwände 20, 21 oder aber ein anderes Objekt - gleich sind.

Der Parkvorgang, wie er mithilfe der Fahrerassistenzeinrichtung 2 durchgeführt wird, kann vollständig autonom erfolgen. Dies bedeutet, dass die Steuereinrichtung 3 abhängig von der berechneten Parkbahn 29, 32 die lenkbaren Räder des Kraftfahrzeugs 1 entsprechend lenkt, sodass das Kraftfahrzeug 1 entlang der Parkbahn 29, 32 in die Garage 18 eingeparkt wird. Die Steuereinrichtung 3 kann gegebenenfalls auch in den Antriebsstrang des Kraftfahrzeugs 1 eingreifen, um das Kraftfahrzeug 1 auf die Schrittgeschwindigkeit zu beschleunigen bzw. abzubremsen. Es kann auch vorgesehen sein, dass die Fahrerassistenzeinrichtung 2 eine Fernbedienung beinhaltet, mittels welcher der Fahrer von außerhalb des Kraftfahrzeugs 1 Steuerbefehle an die Steuereinrichtung 3 übermitteln kann. Aufgrund von solchen Steuerbefehlen kann die Steuereinrichtung 3 dann den Parkvorgang 1 einleiten oder aber unterbrechen.

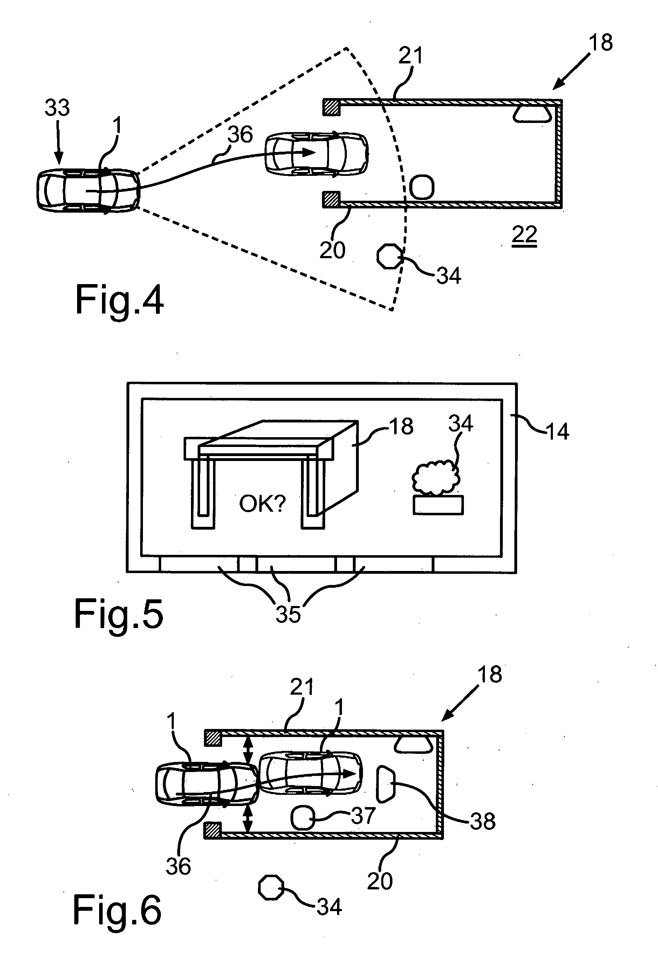

Bezug nehmend nun auf Fig. 4 wird nachfolgend ein weiteres Beispiel näher erläutert. Der Fahrer hält mit seinem Kraftfahrzeug 1 in einer weiteren Anfangsposition 33, in welcher sich das Kraftfahrzeug 1 direkt gegenüber der Garage 18 befindet. Die Sensoreinrichtung 7 erfasst nun die Stirnseite der Garage 18, wie auch ein Referenzobjekt 34 - beispielsweise ein Strauch oder dergleichen -, welches sich neben der Garage 18 befindet. Und zwar erfasst die Sensoreinrichtung 7 die Seitenwände 20, 21 der Garage 18. Die Garage 18 befindet sich also im Erfassungsbereich der Sensoreinrichtung 7. Die Steuereinrichtung 3 identifiziert anhand von Sensordaten den Umgebungsbereich 22 der Garage 18, und zwar anhand von Referenzmerkmalen der Seitenwände 20, 21, wie auch des Referenzobjekts 34. Die Steuereinrichtung 3 steuert nun die Anzeigeeinrichtung 14 an, sodass auf der Anzeigeeinrichtung 14 ein Bild angezeigt wird, wie es in Fig. 5 beispielhaft dargestellt ist. Auf der Anzeigeeinrichtung 14 ist also in schematischer Darstellung die Garage 18 gezeigt, wie auch das Referenzobjekt 34. Der Fahrer wird somit darüber informiert, dass die Garage 18 identifiziert worden ist, und dass ein automatisches Einparken in die Garage 18 möglich ist. Der Fahrer kann nun den automatischen Parkvorgang einleiten, nämlich durch Betätigung einer Bedieneinrichtung 35. Der Fahrer kann also den Vorgang des Einparkens bestätigen oder auch nicht.

Wird der Vorgang durch den Fahrer eingeleitet, so wird das Kraftfahrzeug 1 in die Garage 18 autonom eingeparkt, nämlich entlang einer durch die Steuereinrichtung 3 auf die oben näher bezeichnete Art und Weise festgelegten Parkbahn 36.

Wie bereits ausgeführt, kann die Bewegung des Kraftfahrzeugs 1 in der Garage 18 - wenn die Seitenwände 20, 21 in dem jeweiligen Erfassungsbereich der seitlichen Ultraschallsensoren 8, 9 liegen - durch die Steuereinrichtung 3 geregelt werden. Und zwar erfolgt diese Regelung vorzugsweise derart, dass die seitlichen Abstände des Kraftfahrzeugs 1 zu dem jeweils nächstliegenden Objekt gleich sind. Hier kann die Steuereinrichtung 3 auch von den Kameras 10, 11, 12, 13 aufgenommene Bilddaten berücksichtigen, um die Positionen von erfassten Objekten in der Garage zu bestimmen. Im Ausführungsbeispiel gemäß Fig. 6 befindet sich neben der Seitenwand 20 eine Mülltonne 37, die durch die Sensoreinrichtung 7 erst dann erfasst werden kann, wenn sich das Kraftfahrzeug 1 bereichsweise in der Garage 18 befindet. Die Parkbahn 36 kann dann derart modifiziert werden, dass das Kraftfahrzeug 1 in eine Endposition in der Garage 18 geführt wird, in welcher der Abstand des Kraftfahrzeugs 1 zur Seitenwand 21 gleich dem Abstand zur Mülltonne 37 ist. Das Kraftfahrzeug 1 wird auch in einem sicheren Abstand zu einem weiteren, in der Garage 18 befindlichen Objekt 38 angehalten.

## Patentansprüche

1. Verfahren zum Unterstützen eines Fahrers eines Kraftfahrzeugs (1) beim Einparken in eine Parklücke (19), insbesondere in eine Garage (18), mithilfe einer Fahrerassistenzeinrichtung (2) des Kraftfahrzeugs (1), wobei:
- in einem Lernmodus der Fahrerassistenzeinrichtung (2) Referenzdaten über einen Umgebungsbereich (22) der Parklücke (19) mithilfe einer Sensoreinrichtung (7) der Fahrerassistenzeinrichtung (2) erfasst und abgespeichert werden, während das Kraftfahrzeug (1) durch den Fahrer gesteuert in die Parklücke (19) eingeparkt wird,
- eine Referenzzielposition (27), welche im Lernmodus durch das Kraftfahrzeug (1) erreicht wird, durch die Fahrerassistenzeinrichtung (2) erfasst wird und Daten mit Informationen über diese Referenzzielposition (27) abgespeichert werden,
- in einem nachfolgenden von dem Lernmödus unterschiedlichen Betriebsmodus der Fahrerassistenzeinrichtung (2) Sensordaten durch die Sensoreinrichtung (7) erfasst und mit den Referenzdaten verglichen werden, wobei abhängig von diesem Vergleich der Umgebungsbereich (22) der Parklücke (19) anhand der erfassten Sensordaten erkannt und hierdurch eine aktuelle Position (28, 33) des Kraftfahrzeugs (1) relativ zur Referenzzielposition (27) bestimmt wird und
- abhängig von der aktuellen Position (28, 33) des Kraftfahrzeugs (1) relativ zur Referenzzielposition (27) eine Parkbahn (29, 32, 36) durch die Fahrerassistenzeinrichtung (2) festgelegt wird, entlang welcher das Kraftfahrzeug (1) aus der aktuellen Position (28, 33) heraus in die Parklücke (19) eingeparkt wird.

2. Verfahren nach Anspruch 1,
**dadurch gekennzeichnet, dass**
in dem Lernmodus auch eine Referenzstartposition (23), aus welcher heraus das Kraftfahrzeug (1) in dem Lernmodus bewegt wird, durch die Fahrerassistenzeinrichtung (2) erfasst wird und Daten mit Informationen über die Referenzstartposition (23) bezüglich der Referenzzielposition (27) abgespeichert werden, wobei in dem Betriebsmodus die Parkbahn (29, 32, 36) auch unter Berücksichtigung der Referenzstartposition (23) bezüglich der Referenzzielposition (27) festgelegt wird.

3. Verfahren nach Anspruch 1 oder 2,
**dadurch gekennzeichnet, dass**
in dem Lernmodus eine Referenzbahn (26), entlang welcher das Kraftfahrzeug (1) im Lernmodus in die Parklücke (19) eingeparkt wird, durch die Fahrerassistenzeinrichtung (2) erfasst wird und Daten mit Informationen über einen Verlauf der Referenzbahn (26) abgespeichert werden, wobei in dem Betriebsmodus die Parkbahn (29, 32, 36) auch unter Berücksichtigung des Verlaufs der Referenzbahn (26) festgelegt wird.

4. Verfahren nach Anspruch 3,
**dadurch gekennzeichnet, dass**
in dem Betriebsmodus eine solche Parkbahn (29, 32, 36) festgelegt wird, die mit der Referenzbahn (26) zumindest in einem Endbereich (30) zusammenfällt, so dass entlang der Parkbahn (29, 32, 36) das Kraftfahrzeug (1) auf die Referenzbahn (26) geführt wird.

5. Verfahren nach Anspruch 3 oder 4,
**dadurch gekennzeichnet, dass**
in dem Betriebsmodus eine solche Parkbahn (29, 32, 36) festgelegt wird, die sich der Referenzbahn (26) stetig zunehmend annähert, bis sie mit der Referenzbahn (26) zusammenfällt.

6. Verfahren nach einem der Ansprüche 3 bis 5,
**dadurch gekennzeichnet, dass**
in dem Betriebsmodus eine solche Parkbahn (29, 32, 36) festgelegt wird, die sich an die Referenzbahn (26) an einem Punkt (31) anschließt, an welchem die Fahrzeuglängsachse, wenn sich das Kraftfahrzeug (1) entlang der festgelegten Parkbahn (29, 32, 36) bewegt, mit der Fahrzeuglängsachse, wenn sich das Kraftfahrzeug (1) entlang der Referenzbahn (26) bewegt, einen Winkel kleiner als ein vorbestimmter Winkelwert einschließt.

7. Verfahren nach Anspruch 1 oder 2,
**dadurch gekennzeichnet, dass**
ausschließlich abhängig von der aktuellen Position (28, 33) des Kraftfahrzeugs (1) relativ zur Referenzzielposition (27) und/oder abhängig von der aktuellen Position (28, 33) des Kraftfahrzeugs (1) relativ zur Referenzstartposition (23) sowie unter Berücksichtigung der Referenzdaten und/oder der Sensordaten die Parkbahn (29, 32, 36) neu festgelegt wird.

8. Verfahren nach einem der vorhergehenden Ansprüche,
**dadurch gekennzeichnet, dass**
zur Erkennung des Umgebungsbereichs (22) zumindest ein in den Referenzdaten enthaltenes Referenzmerkmal des Umgebungsbereichs (22) anhand der Sensordaten erkannt wird.

9. Verfahren nach einem der vorhergehenden Ansprüche,
**dadurch gekennzeichnet, dass**
der Umgebungsbereich (22) anhand von Referenzmerkmalen auch dann erkannt wird, wenn die Parklücke (19) durch die Sensoreinrichtung (7) nicht erfasst wird.

10. Verfahren nach einem der vorhergehenden Ansprüche,
**dadurch gekennzeichnet, dass**
anhand zumindest eines der folgenden Referenzmerkmale der Umgebungsbereich (22) erkannt wird:
- einer relativen Position eines Referenzobjektes (20, 21, 22, 24, 34) bezüglich eines anderen Referenzobjektes (20, 21, 22, 24, 34) und/oder bezüglich der Parklücke (19) und/oder
- einer geometrischen Form zumindest eines Referenzobjektes (20, 21, 22, 24, 34) und/oder
- einer Farbgebung zumindest eines Referenzobjektes (20, 21, 22, 24, 34).

11. Verfahren nach einem der vorhergehenden Ansprüche,
**dadurch gekennzeichnet, dass**
die Referenzdaten und/oder die Sensordaten mithilfe zumindest einer Kamera (10, 11, 12, 13) und/oder mithilfe zumindest eines Ultraschallsensors (8, 9, 16, 17) der Sensoreinrichtung (7) erfasst werden.

12. Verfahren nach einem der vorhergehenden Ansprüche,
**dadurch gekennzeichnet, dass**
auch während des Vorgangs des Einparkens Sensordaten durch die Sensoreinrichtung (7) erfasst werden und anhand der Sensordaten Entfernungen des Kraftfahrzeugs (1) zu erfassten Objekten bestimmt werden, wobei nach Erfülltsein eines auf die Entfernungen bezogenen vorbestimmten Korrekturkriteriums die Parkbahn (29, 32, 36) korrigiert wird.

13. Verfahren nach Anspruch 12,
**dadurch gekennzeichnet, dass**
das vorbestimmte Korrekturkriterium umfasst, dass eine erfasste Entfernung einen vorgegebenen Grenzwert unterschreitet.

14. Verfahren nach einem der vorhergehenden Ansprüche,
**dadurch gekennzeichnet, dass**
das Einparken in die Parklücke (19) autonom durch die Fahrerassistenzeinrichtung (2), insbesondere aufgrund einer Eingabe, die der Fahrer an einer Bedieneinrichtung (35) vornimmt, erfolgt.

15. Fahrerassistenzeinrichtung (2) zum Unterstützen eines Fahrers eines Kraftfahrzeugs (1) beim Einparken in eine Parklücke (19), insbesondere in eine Garage (18), wobei die Fahrerassistenzeinrichtung (2) dazu ausgelegt ist:
- in einem Lernmodus Referenzdaten über einen Umgebungsbereich (22) der Parklücke (19) zu erfassen und abzuspeichern, während das Kraftfahrzeug (1) durch den Fahrer gesteuert in die Parklücke (19) eingeparkt wird,
- in dem Lernmodus eine Referenzzielposition (27), welche durch das Kraftfahrzeug (1) erreicht wird, zu erfassen und Daten mit Informationen über diese Referenzzielposition (27) abzuspeichern,
- in einem nachfolgenden von dem Lernmodus unterschiedlichen Betriebsmodus Sensordaten zu erfassen und mit den Referenzdaten zu vergleichen und abhängig von diesem Vergleich den Umgebungsbereich (22) der Parklücke (19) anhand der erfassten Sensordaten zu erkennen und hierdurch eine aktuelle Position (28, 33) des Kraftfahrzeugs (1) relativ zur Referenzzielposition (27) zu bestimmen und
- abhängig von der aktuellen Position (28, 33) des Kraftfahrzeugs (1) relativ zur Referenzzielposition (27) eine Parkbahn (29, 32, 36) festzulegen, entlang welcher das Kraftfahrzeug (1) aus der aktuellen Position (28, 33) heraus in die Parklücke (19) eingeparkt wird.

## Claims

1. Method for assisting a driver of a motor vehicle (1) when parking in a parking space (19), in particular in a garage (18), using a driver assistance device (2) of the motor vehicle (1), wherein:
- in a learning mode of the driver assistance device (2), reference data about a surrounding area (22) of the parking space (19) are recorded and stored using a sensor device (7) of the driver assistance device (2), while the motor vehicle (1) is parked in the parking space (19) under driver control,
- a reference target position (27), which is reached by the motor vehicle (1) in learning mode, is recorded by the driver assistance device (2) and data with information about this reference target position (27) are stored,
- in a subsequent operating mode different from the learning mode the driver assistance device (2) records sensor data via the sensor device (7) and compares it with the reference data, wherein depending on this comparison the surrounding area (22) of the parking space (19) is identified using the recorded sensor data, and thereby a current position (28, 33) of the motor vehicle (1) relative to the reference target position (27) is determined and
- depending on the current position (28, 33) of the motor vehicle (1) relative to the reference target position (27), a parking route (29, 32, 36) is determined by the driver assistance device (2), along which the motor vehicle (1) is parked in the parking space (19) from the current position (28, 33).

2. Method according to Claim 1,
**characterized in that**
in the learning mode a reference starting position (23), from which the motor vehicle (1) is moved in the learning mode, is also recorded by the driver assistance device (2) and data with information about the reference starting position (23) relative to the reference target position (27) are stored, wherein in the operating mode the parking route (29, 32, 36) is also determined taking into account the reference starting position (23) relative to the reference target position (27).

3. Method according to Claim 1 or 2,
**characterized in that**
in the learning mode a reference route (26), along which the motor vehicle (1) is parked in the parking space (19) in the learning mode, is recorded by the driver assistance device (2) and data with information about a course of the reference route (26) are stored, wherein the parking route (29, 32, 36) is determined in the operating mode, also taking into account the course of the reference route (26).

4. Method according to Claim 3,
**characterized in that**
in the operating mode a parking route (29, 32, 36) is determined, which coincides with the reference route (26) at least in an end region (30), so that the motor vehicle (1) is guided to the reference route (26) along the parking route (29, 32, 36).

5. Method according to Claim 3 or 4,
**characterized in that**
in the operating mode a parking route (29, 32, 36) is determined, which steadily increasingly approaches the reference route (26), until it coincides with the reference route (26).

6. Method according to any one of Claims 3 to 5,
**characterized in that**
in the operating mode a parking route (29, 32, 36) is determined, which adjoins the reference route (26) at a point (31) at which the vehicle's longitudinal axis, when the motor vehicle (1) is moving along the determined parking route (29, 32, 36), encloses an angle with the vehicle's longitudinal axis, when the motor vehicle (1) is moving along the reference route (26), that is smaller than a predetermined angle value.

7. Method according to Claim 1 or 2,
**characterized in that**
the parking route (29, 32, 36) is determined anew depending only on the current position (28, 33) of the motor vehicle (1) relative to the reference target position (27) and/or depending on the current position (28, 33) of the motor vehicle (1) relative to the reference starting position (23) and taking into account the reference data and/or the sensor data.

8. Method according to any one of the preceding claims,
**characterized in that**
for recognition of the surrounding area (22), at least one reference feature of the surrounding area (22) contained in the reference data is recognized using the sensor data.

9. Method according to any one of the preceding claims,
**characterized in that**
the surrounding area (22) is recognized using reference features even if the parking space (19) is not detected by the sensor device (7).

10. Method according to any one of the preceding claims,
**characterized in that**
the surrounding area (22) is recognized using at least one of the following reference features:
- a relative position of a reference object (20, 21, 22, 24, 34) relative to another reference object (20, 21, 22, 24, 34) and/or relative to the parking space (19) and/or
- a geometric shape of at least one reference object (20, 21, 22, 24, 34) and/or
- a colouration of at least one reference object (20, 21, 22, 24, 34).

11. Method according to any one of the preceding claims,
**characterized in that**
the reference data and/or the sensor data are recorded using at least one camera (10, 11, 12, 13) and/or using at least one ultrasound sensor (8, 9, 16, 17) of the sensor device (7).

12. Method according to any one of the preceding claims,
**characterized in that**
during the parking process, sensor data are also detected by the sensor device (7) and distances of the motor vehicle (1) from recorded objects are determined using the sensor data, wherein the parking route (29, 32, 36) is corrected after fulfilment of a predetermined correction criterion related to the distances.

13. Method according to Claim 12,
**characterized in that**
the predetermined correction criterion consists **in that** a detected distance is below a predetermined limit.

14. Method according to any one of the preceding claims,
**characterized in that**
parking in the parking space (19) is carried out autonomously by the driver assistance device (2), in particular on the basis of an input that the driver carries out at an operating device (35).

15. Driver assistance device (2) for assisting a driver of a motor vehicle (1) when parking in a parking space (19), in particular in a garage (18), wherein the driver assistance device (2) is designed:
- to detect and store reference data about a surrounding area (22) of the parking space (19) in a learning mode, while the motor vehicle (1) is parked in the parking space (19) controlled by the driver,
- in the learning mode to detect a reference target position (27), which is reached by the motor vehicle (1), and to store data with information about this reference target position (27),
- to detect sensor data in a subsequent operating mode different from the learning mode and to compare it with the reference data and, depending on this comparison, to recognize the surrounding area (22) of the parking space (19) using the detected sensor data and thereby to determine a current position (28, 33) of the motor vehicle (1) relative to the reference target position (27) and
- depending on the current position (28, 33) of the motor vehicle (1) relative to the reference target position (27), to determine a parking route (29, 32, 36), along which the motor vehicle (1) is parked in the parking space (19) from the current position (28, 33).

## Revendications

1. Procédé d'assistance au conducteur d'un véhicule automobile (1) lors des manoeuvres de stationnement dans un emplacement de stationnement (19), en particulier dans un garage (18), à l'aide d'un dispositif (2) d'assistance au conducteur du véhicule (1), dans lequel :
le dispositif (2) d'assistance au conducteur étant en mode d'apprentissage, des données de référence concernant une zone (22) entourant l'emplacement de stationnement (19) sont saisies à l'aide d'un dispositif (7) de capteurs du dispositif (2) d'assistance au conducteur et sont conservées en mémoire pendant que le véhicule (1) est manoeuvré par le conducteur jusque dans l'emplacement de stationnement (19),
une position cible de référence (27) atteinte en mode d'apprentissage par le véhicule automobile (1) est saisie par le dispositif (2) d'assistance au conducteur et des données contenant des informations concernant cette position cible de référence (27) sont conservées en mémoire,
le dispositif (2) d'assistance au conducteur étant ensuite en mode de conduite, différent du mode d'apprentissage, des données de capteurs sont saisies par le dispositif (7) de capteurs et comparées aux données de référence, la zone (22) entourant l'emplacement de stationnement (19) étant en fonction de cette comparaison détectée à l'aide des données des capteurs saisies et la position effective (28, 33) du véhicule automobile (1) par rapport à la position cible de référence (27) étant ainsi déterminée et
un parcours de stationnement (29, 32, 36) le long duquel le véhicule automobile (1) est manoeuvré depuis la position effective (28, 33) jusque dans l'emplacement de stationnement (19) est défini par le dispositif (2) d'assistance au conducteur en fonction de la position effective (28, 33) du véhicule automobile (1) par rapport à la position cible de référence (27).

2. Procédé selon la revendication 1, **caractérisé en ce qu'**en mode d'apprentissage, une position initiale de référence (23) depuis laquelle le véhicule automobile (1) est déplacé en mode d'apprentissage est saisie par le dispositif (2) d'assistance au conducteur et des données contenant des informations concernant la position initiale de référence (23) par rapport à la position cible de référence (27) sont conservées en mémoire, le parcours de stationnement (29, 32, 36) étant également défini en mode de conduite en tenant compte de la position initiale de référence (23) par rapport à la position cible de référence (27).

3. Procédé selon les revendications 1 ou 2, **caractérisé en ce qu'**en mode d'apprentissage, un parcours de référence (26) le long duquel le véhicule automobile (1) est manoeuvré jusque dans l'emplacement de stationnement (19) en mode d'apprentissage est saisi par le dispositif (2) d'assistance au conducteur et des données contenant des informations concernant le déroulement du parcours de référence (26) sont conservées en mémoire, le parcours de stationnement (29, 32, 36) étant défini en mode de conduite en tenant également compte du déroulement du parcours de référence (26).

4. Procédé selon la revendication 3, **caractérisé en ce qu'**en mode de conduite, un parcours de stationnement (29, 32, 36) qui coïncide avec le parcours de référence (26) au moins dans une partie terminale (30) est défini en mode de conduite, de telle sorte que le véhicule automobile (1) soit guidé sur le parcours de référence (26) le long du parcours de stationnement (29, 32, 36).

5. Procédé selon les revendications 3 ou 4, **caractérisé en ce qu'**en mode de fonctionnement, un parcours de stationnement (29, 32, 36) qui s'approche de façon progressivement croissante de la piste de référence (26) jusqu'à coïncider avec le parcours de référence (26) est défini.

6. Procédé selon l'une des revendications 3 à 5, **caractérisé en ce qu'**en mode de fonctionnement, un parcours de stationnement (29, 32, 36) qui se raccorde au parcours de référence (26) en un point (31) sur lequel l'axe longitudinal du véhicule lorsque le véhicule automobile (1) se déplace sur le parcours de stationnement (29, 32, 36) défini forme un angle inférieur à une valeur angulaire prédéterminée avec l'axe longitudinal du véhicule lorsque le véhicule automobile (1) se déplace le long du parcours de référence (26).

7. Procédé selon les revendications 1 ou 2, **caractérisé en ce que** le parcours de stationnement (29, 32, 36) est défini à nouveau uniquement en fonction de la position effective (28, 33) du véhicule automobile (1) par rapport à la position cible de référence (27) et/ou en fonction de la position effective (28, 33) du véhicule automobile (1) par rapport à la position initiale de référence (23) ainsi qu'en tenant compte des données de référence et/ou des données des capteurs.

8. Procédé selon l'une des revendications précédentes, **caractérisé en ce que** pour détecter la zone environnante (22), au moins une caractéristique de référence de la zone environnante (22) que contiennent les données de référence est détectée à l'aide des données de capteurs.

9. Procédé selon l'une des revendications précédentes, **caractérisé en ce que** la zone environnante (22) est détectée à l'aide de caractéristiques de référence même lorsque l'emplacement de stationnement (19) n'est pas détecté par le dispositif de capteurs (7).

10. Procédé selon l'une des revendications précédentes, **caractérisé en ce que** la zone environnante (22) est détectée à l'aide d'au moins l'une des caractéristiques de référence suivantes :
une position relative d'un objet de référence (20, 21, 22, 24, 34) par rapport à un autre objet de référence (20, 21, 22, 24, 34) et/ou par rapport à l'emplacement de stationnement (19),
la forme géométrique d'au moins un objet de référence (20, 21, 22, 24, 34) et/ou
la couleur d'au moins un objet de référence (20, 21, 22, 24, 34).

11. Procédé selon l'une des revendications précédentes, **caractérisé en ce que** les données de référence et/ou les données de capteurs sont saisies à l'aide d'au moins une caméra (10, 11, 12, 13) et/ou à l'aide d'au moins un capteur à ultrasons (8, 9, 16, 17) du dispositif (7) de capteurs.

12. Procédé selon l'une des revendications précédentes, **caractérisé en ce que** pendant le déroulement de la manoeuvre de stationnement, des données de capteurs sont également saisies par le dispositif (7) de capteurs, les distances du véhicule automobile (1) saisies par rapport à des objets sont définies à l'aide des données de capteurs, le parcours de stationnement (29, 32, 36) étant corrigé selon un critère de correction prédéfini pour les distances.

13. Procédé selon la revendication 12, **caractérisé en ce que** le critère de correction prédéfini implique qu'une distance saisie n'atteint pas une valeur limite prédéfinie.

14. Procédé selon l'une des revendications précédentes, **caractérisé en ce que** la manoeuvre de stationnement dans l'emplacement de stationnement (19) est réalisée de manière autonome par le dispositif (2) d'assistance au conducteur, en particulier sur la base d'une introduction faite par le conducteur sur un dispositif de commande (35).

15. Dispositif (2) d'assistance au conducteur permettant d'assister le conducteur d'un véhicule automobile (1) lors de manoeuvres de stationnement dans un emplacement de stationnement (19) et en particulier dans un garage (18), le dispositif (2) d'assistance au conducteur étant conçu pour :
en mode d'apprentissage, saisir des données de référence concernant une zone (22) entourant l'emplacement de stationnement (19) et les conserver en mémoire pendant que le véhicule (1) est manoeuvré par le conducteur jusque dans l'emplacement de stationnement (19),
en mode d'apprentissage, saisir une position cible de référence (27) atteinte par le véhicule automobile (1) et conserver en mémoire des données contenant des informations concernant cette position cible de référence (27),
ensuite, en mode de conduite, différent du mode d'apprentissage, saisir des données de capteurs et les comparer aux données de référence, détecter à l'aide des données des capteurs saisies la zone (22) entourant l'emplacement de stationnement (19) en fonction de cette comparaison et déterminer ainsi la position effective (28, 33) du véhicule automobile (1) par rapport à la position cible de référence (27) et
en fonction de la position effective (28, 33) du véhicule automobile (1) par rapport à la position cible de référence (27), définir un parcours de stationnement (29, 32, 36) le long duquel le véhicule automobile (1) est manoeuvré depuis la position effective (28, 33) jusque dans l'emplacement de stationnement (19).
